Europäisches Patentamt

European Patent Office

Office européen des brevets

(11) Veröffentlichungsnummer: **0 487 974 A2**

# EUROPÄISCHE PATENTANMELDUNG

(21) Anmeldenummer: **91119318.3**

(22) Anmeldetag: **13.11.91**

(51) Int. Cl.⁵: **C08K 5/16**, C08J 3/20

(30) Priorität: **30.11.90 AT 2422/90**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **Chemie Linz Gesellschaft m.b.H.**
**St.Peter-Strasse 25**
**A-4021 Linz(AT)**

(72) Erfinder: **Horacek, Heinrich, Dr.**
**Am Wiesenrain 1**
**A-4040 Puchenau(AT)**

(74) Vertreter: **Kunz, Ekkehard, Dr.**
**Chemie Holding AG Patentwesen St.**
**Peter-Strasse 25**
**A-4021 Linz(AT)**

(54) **Feste Flammhemmer-Agglomerate für Thermoplaste.**

(57) Feste, stickstoffhältige Flammhemmer-Agglomerate zur flammhemmenden Ausrüstung von Thermoplasten, die aus Primärteilchen mit einer mittleren Korngröße von 0,1 bis 10 μm bestehen. Bei der Einarbeitung in den Thermoplasten zerfallen die Agglomerate wieder in die Primärteilchen.

EP 0 487 974 A2

Die Erfindung betrifft feste Agglomerate als Flammhemmer für Thermoplaste, die aus Primärteilchen von stickstoffhältigen Flammhemmern sowie gegebenenfalls Thermoplasten und weiteren üblichen Additiven bestehen, sowie deren Verwendung zur flammhemmenden Ausrüstung von Thermoplasten.

In EP-A-439.719 bzw. EP 91/116.278 ist beschrieben, beispielsweise Melamin, Melamincyanurat oder Harnstoffcyanurat als Flammhemmer für Kunststoffe zu verwenden. Eine besonders gute Wirkung ergibt sich insbesondere dann, wenn die Flammhemmer möglichst gleichmäßig und möglichst fein verteilt im Kunststoff vorliegen. Im Falle von festen Flammhemmern wird dies durch möglichst feine Pulver erreicht. Insgesamt ergeben sich bei der Verwendung von feinen Pulvern die Vorteile von geringeren Konzentrationsschwankungen der im Kunststoff eingearbeiteten Flammhemmer, also einer gleichmäßigen Verteilung im Kunststoff, ein höherer LOI-Wert (Limiting Oxygen Index), keine Sollbruchstellen wie im Falle von großen Körnern, und dadurch bessere mechanische Eigenschaften, sowie Zunahme der Transparenz und des Glanzes der flammhemmend ausgerüsteten Kunststoffe. Allerding ergeben sich aus der Verwendung von feinen Pulvern auch gravierende Nachteile, so vor allem Staubbildung, Dosierschwierigkeiten, Brückenbildungen, die Gefahr von elektrostatischen Aufladungen und von Staubexplosionen, geringe Schüttgewichte und damit verbunden vor allem hoher Transport- und Lageraufwand. Zur Ausschaltung dieser Nachteile werden in der EP-A-115.341 Flammhemmer auf Basis von Organohalogenverbindungen beschrieben, die unter Zusatz eines thermoplastischen Bindemittels granuliert sind, und die bei der Einarbeitung in die Kunststoffe gleichmäßig verteilt werden. Diese Flammhemmer besitzen jedoch den Nachteil, daß sie im Brandfall toxische und korrosive Halogene freisetzen.

Die Aufgabe der Erfindung lag darin, die Vorteile von feinen Pulvern in Kunststoffen auch bei Verwendung von halogenfreien Flammhemmern beizubehalten und gleichzeitig deren Nachteile bei der Lagerung, im Handling und bei der Verarbeitung auszuschalten. Das vorliegende Problem konnte dadurch gelöst werden, daß agglomerierte stickstoffhältige Flammhemmer, die aus feinen Partikeln bestehen und die bei der Einarbeitung in den Kunststoff wieder in die ursprünglichen Primärpartikel zerfallen, verwendet werden.

Gegenstand der Erfindung sind demnach feste, stickstoffhältige Flammhemmer-Agglomerate mit einer mittleren Teilchengröße von 0,1 bis 5 mm, die Primärteilchen von Flammhemmern mit einer mittleren Teilchengröße von 0,1 bis 10 $\mu$m enthalten, zur flammhemmenden Ausrüstung von Thermoplasten, mit der Maßgabe, daß die Agglomerate bei der Einarbeitung in die schmelzflüssigen Thermoplaste wieder in die Primärteilchen zerfallen.

Es ist dabei überraschend, daß die Bildung der Agglomerate auch ohne Verwendung eines Bindemittels möglich ist, und daß die festen Agglomerate bei der späteren Einarbeitung in den Kunststoff, beispielsweise in einem Mischer, Kneter oder Extruder, nicht in agglomerierter Form als grobe Teilchen erhalten bleiben, sondern wieder in die feinen Primärpartikel zerfallen, die überdies gleichmäßig im Thermoplasten verteilt sind. Dabei ist es besonders überraschend, daß diese gleichmäßige Vereilung in den Thermoplasten auch bei den relativ hoch schmelzenden stickstoffhältigen Flammhemmern erreicht wird, die bei der Einarbeitungstemperatur in die Thermoplaste zumeist noch gar nicht geschmolzen sind, sondern noch in fester Form vorliegen.

Ein weiterer Gegenstand der Erfindung ist ein Verfahren zur flammhemmenden Ausrüstung von Thermoplasten, das dadurch gekennzeichnet ist, daß feste, stickstoffhältige Flammhemmer-Agglomerate mit einer mittleren Teilchengröße von 0,1 bis 5 mm, die Primärteilchen von Flammhemmern mit einer mittleren Teil chengröße von 0,1 bis 10 $\mu$m enthalten, in die schmelzflüssigen Thermoplaste eingearbeitet werden, wobei die Agglomerate wieder in die Primärteilchen zerfallen.

Die Teilchengröße der Primärteilchen wurde mit einem CILAS-Granulometer 715 gemessen, die Teilchengröße der Agglomerate durch Siebanalyse nach DIN 4193 und 4188 bestimmt. Die Angabe der mittleren Teilchengröße erfolgte gemäß DIN 66141 als D50. Dieser Wert gibt in einem Diagramm, bei dem die Teilchengröße gegen die Menge aufgetragen wird, jene Teilchengröße an, bei der die Teilchenmenge in zwei gleiche Mengen geteilt wird. Sie liegt bei den Agglomeraten bevorzugt bei 0,1 bis 2 mm, bei den Primärteilchen bevorzugt bei 0,1 bis 5 $\mu$m. Es erweist sich in manchen Fällen als vorteilhaft, bis zu etwa 50 Gew.%, bevorzugt 5 bis 30 Gew.% Thermoplaste in die Agglomerate einzuarbeiten. Bevorzugt werden dabei jene Thermoplaste verwendet, in die das Flammhemmer-Agglomerat zur flammhemmenden Ausrüstung eingearbeitet werden soll. Geeignet zur flammhemmenden Ausrüstung mit den erfindungsgemäßen Flammhemmer-Agglomeraten sind alle Kunststoffe, die sich thermoplastisch verarbeiten lassen, beispielsweise Polyolefine, wie z. B. Polyethylen, Polypropylen, Ethylen-Propylen-Copolymere, Polybutylen oder Polymethylpenten, Polyamide, Polystyrol, thermoplastische Polyester oder Polyurethane, Acrylnitril enthaltende Kunststoffe wie z. B. ABS (Acrylnitril-Butadien-Styrol-Copolymer) oder SAN (Styrol-Acrylnitril-Copolymer), Polyoxymethylen, Polysulfone, Polyetheretherketone, Polyetherimide, thermoplastisch verarbeitbare Polyimide oder Polyamidimide. In den Kunststoffen können auch Haftvermittler, coupling-agents, wie z. B.

mit Maleinsäureanhydrid gepfropftes Polypropylen oder Ethylen-Vinylacetat-Copolymere mit reaktiven Gruppen, beispielsweise Bynel-Typen von Du Pont, mitverwendet werden.

Als stickstoffhältige Flammhemmer, kommen beispielsweise Melamin bzw. Derivate des Melamins, wie z. B. Melamincyanurat oder Melaminphosphat, Guanidincyanurat, Guanidinphosphat, Harnstoffcyanurat oder Cyanursäure in Frage. Es können auch Mischungen verschiedener Flammhemmer verwendet werden. Bevorzugte Flammhemmer sind Melamin, Melamincyanurat oder Melaminphosphat.

Der erfindungsgemäße Effekt der gleichmäßigen Verteilung der Flammhemmer im flammhemmend ausgerüsteten Kunststoff zeigt sich überraschenderweise auch bei jenen Flammhemmern, deren Schmelzpunkte über jenen Temperaturen liegen, die bei ihrer Einarbeitung in die schmelzflüssigen Thermoplaste angewendet werden. Die Verarbeitungstemperaturen der Thermoplaste liegen beispielsweise für PVC bei etwa 150°C, für Polypropylen bei etwa 200°C, für Polyamid 66 bei etwa 270°C. Diese Flammhemmer sind bei den Verarbeitungstemperaturen demnach noch nicht geschmolzen und liegen trotzdem auch als feste Partikel gleichmäßig im Thermoplasten verteilt vor.

Die Flammhemmer-Agglomerate können auch weitere in der Kunststoffverarbeitung übliche Additive, wie z. B. Dispergiermittel oder Seifen, Stabilisatoren, Weichmacher, Antistatika, Gleitmittel enthalten. Es können beispielsweise 0,1 bis 10 Gew.-% Dispergiermittel oder Seifen, wie z. B. Naphthenate, Stearate, Palmitate, Oleate oder Ölsäure in den Flammhemmer-Agglomeraten enthalten sein.

Die Herstellung der Flammhemmer-Agglomerate gelingt durch übliche Agglomerierverfahren, beispielsweise durch Trocken-Agglomerierverfahren, wie z. B. durch Prillen, Preßgranulation, Schneckengranulation, Trommelgranulation, Tellergranulation, oder durch Agglomerieren von feuchten Materialien, z. B. im Siebgranulator oder Drucksieb, im Fließbetttrockner, Wirbelschichttrockner, Lufterhitzer oder Mischer. Im Falle der Verwendung eines Drucksiebes werden die Flammhemmer und gegebenenfalls Thermoplaste und Additive beispielsweise mit Wasser oder wäßrigen Lösungen vermischt und durch ein Drucksieb mit definierter Maschenweite gedrückt, wobei Agglomerate mit einer der Maschenweite entsprechenden Teilchengröße erhalten werden. Die Agglomerate besitzen ein wesentlich höheres Schüttgewicht als die aus den entsprechenden Primärteilchen bestehenden Pulver. Dies ergibt besondere Vorteile vor allem bei Lagerung, Transport und Verarbeitung.

Beispiel 1:

15 kg Melamincyanurat-Pulver (MC, Chemie Linz, Type C) mit einer mittleren Teilchengröße von 2 μm (CILAS-Granulometer 715), einem Schüttgewicht von 220 g/l und einem Schmelzpunkt von 360°C, wurden mit 4,5 kg Wasser vermischt und durch ein Drucksieb mit einer Maschenweite von 1,6 mm gedrückt. Die erhaltenen Agglomerate wurden im Umlufttrockenschrank bei 110°C getrocknet, die mittlere Teilchengröße lag bei 0,5 mm (Siebanalyse nach DIN 4193 und 4188), das Schüttgewicht bei 650 g/l.

Anschließend wurden die Agglomerate auf einem Zweischneckenextruder der Firma Leistritz in Polyamid 6,6 (PA 6,6, Durethan A31, Bayer) bei 270°C, einer Schneckendrehzahl von 100 U/min und einem Durchsatz von 10 kg/h eingearbeitet und PA-Granulate mit einem Gehalt von 10 Gew.% Melamincyanurat hergestellt. Dabei zerfielen die Agglomerate wieder in die Melamincyanurat-Primärteilchen, die gleichmäßig im PA 6,6 verteilt wurden. Als Maß für die Gleichmäßigkeit der Verteilung diente die relative Standardabweichung des Stickstoffgehaltes, der an einzelnen Granulaten gemessen wurde. Die Bestimmung des Stickstoffgehaltes erfolgte nach Kjeldahl. Die relative Standardabweichung (rel S) des Stickstoffgehaltes lag bei 2,0 %, sie errechnet sich gemäß

$$\text{rel } S = \frac{(x - \bar{x})^2 \cdot 100}{(n - 1) \cdot x}$$

$\bar{x}$ = Mittelwert
x = Einzelwert
n = Zahl der Messungen

In Tabelle 1 sind die Art des Flammhemmers, dessen Schmelzpunkt (Fp), die Teilchengröße der Primärteilchen (Pr) in μm und der Agglomerate (Aggl) in mm sowie Art und Menge von gegebenenfalls im Agglomerat enthaltenen Thermoplasten oder Additiven zusammengestellt. Weiters ist in Tabelle 1 die Art des Thermoplasten angeführt, in den das Agglomerat anschließend eingearbeitet wurde, sowie die relative Standardabweichung des Stickstoffgehaltes (rel S) in den extrudierten Granulaten als Maß für die gleichmäßige Verteilung des Flammhemmers im Thermoplasten.

Beispiel 2:

7,5 kg Melamincyanurat-Pulver (Chemie Linz, Type C) und 7,5 kg Polyamidpulver (PA 6, Ultramid B4 von BASF) mit einer mittleren Teilchengröße von 2 $\mu$m wurden mit 5 kg Wasser vermischt und durch ein Drucksieb mit einer Maschenweite von 1,6 mm gedrückt. Die erhaltenen Agglomerate wurden bei 110° C getrocknet, die mittlere Teilchengröße lag bei 0,5 mm, das Schüttgewicht bei 600 g/l.

Die Agglomerate wurden anschließend analog zu Beispiel 1 auf einem Zweischneckenextruder in Polyamid 6,6 (Durethan A31 von Bayer) eingearbeitet und PA-Granulate mit einem Gehalt von 10 Gew.% Melamincyanurat hergestellt. Die relative Standardabweichung des Stickstoffgehaltes der Granulatkörner lag bei 1,0 %.

Beispiele 3 bis 14:

Analog zu Beispiel 2 wurden Agglomerate aus den in Tabelle 1 angeführten Flammhemmern, Thermoplasten und Additiven hergestellt, die anschließend auf einem Zweischneckenextruder in die jeweils verwendeten Thermoplaste eingearbeitet wurden. Die Extrusionstemperatur lag für Polyamid (PA) 66 bei 270° C, für Polypropylen (PP) und Polyoxymethylen (POM) bei 200° C und für PVC bei 150° C. Dabei wurden Granulate des jeweils verwendeten Thermoplasten mit einem Gehalt von 10 Gew.% des jeweils verwendeten Flammhemmers erhalten. Die Teilchengröße der Primärteilchen (Pr), der Agglomerate (Aggl) sowie die relative Standardabweichung des Stickstoffgehaltes der Granulate sind ebenfalls in Tabelle 1 angegeben. Bei den Beispielen 3, 6 und 7 betrug die Maschenweite des Drucksiebes 1,6 mm, bei den Beispielen 4 und 5 0,8 mm, bei den Beispielen 8 bis 14 2,6 mm.

Das als Flammhemmer eingesetzte Melamincyanurat (Typ A: 1 mm mittlerer Teilchendurchmesser, Typ B: 10 $\mu$m Typ C: 2 $\mu$m, Typ D: 0,1 $\mu$m ), Harnstoffcyanurat, Melaminphosphat und Melamin sind im Handel erhältlich (Chemie Linz). Als Additive wurden Glycerintristearat (Hoechst), Ca-Naphthenat (Fa. Bärlocher), Zn-Stearat (Fa. Dr. L. C. Marquart) und Aerosol OS (Na-Isopropylnaphthalinkomplex von Cyanamid) eingesetzt. Als PA 6 wurde Ultramid B4 (BASF), als PA66 Durethan A31 (Bayer), als PP Daplen BE 50 (Petrochemie Danubia), als POM Ultraform (BASF), als PVC Vinnol BL (Wacker Chemie) verwendet.

Vergleichsbeispiele V1 und V2:

Auf einem Zweischneckenextruder wurde nicht agglomeriertes Melamincyanurat-Pulver mit einer mittle-ren Teilchengröße von 2 $\mu$m (V1) bzw 1 mm (V2) in Polyamid 6,6 eingearbeitet und PA-Granulate mit einem Gehalt von 10 Gew.% Melamincyanurat hergestellt. Die relative Standardabweichung des Stickstoffgehaltes der erhaltenen PA-Granulate, und damit die Verteilung der Flammhemmer im Polyamid, war bei Verwendung des groben Melamincyanurat-Pulvers (V2) mit 7,0 % wesentlich schlechter als bei Verwendung des feinen Melamincyanurat-Pulver (1,5 % gemäß V1).

Tabelle 1

| Bsp. | Flammhemmer[1] | Fp (°C) | Gew% | Thermoplast[2] | Gew% | Additiv[3] | Teilchengr. Pr (μm) | Aggl. (mm) | Einarbeitung in Thermoplast[2] | relS (%) |
|---|---|---|---|---|---|---|---|---|---|---|
| 1 | MC | 360 | | - | | - | 2 | 0,5 | PA 66 | 2 |
| 2 | MC | | 50 | PA 6 | | - | 2 | 0,3 | PA 66 | 1 |
| 3 | MC | | 25 | PA 6 | 1 | ZnSt | 2 | 0,4 | PA 66 | 1,5 |
| 4 | MC | | 25 | PA 6 | 1 | GlSt | 2 | 0,2 | PA 66 | 2 |
| 5 | MC | | | - | 1 | CaNaph | 0,1 | 0,15 | PA 66 | 2,5 |
| 6 | MC | | | - | 1 | Aerosol | 2 | 0,4 | PA 66 | 1 |
| 7 | MC | | 25 | PA 6 | | - | 10 | 0,3 | PA 66 | 3 |
| 8 | HC | 260 | | - | | - | 2 | 1,1 | PP | 1,5 |
| 9 | HC | | | - | | - | 2 | 1,1 | PP | 2 |
| 10 | HC | | 25 | PP | 1 | ZnSt | 2 | 1,1 | PP | 1 |
| 11 | M | 355 | | - | | - | 2 | 1,5 | POM | 1 |
| 12 | M | | 25 | POM | | - | 2 | 1,5 | POM | 1,5 |
| 13 | M | | 25 | POM | 1 | ZnSt | 2 | 1,5 | POM | 1 |
| 14 | MP | 340 | | - | | - | 2 | 1,5 | PVC | 2 |
| V1 | MC | 360 | | - | | - | 2 | - | PA 66 | 1,5 |
| V2 | MC | | | - | | - | 1000 | - | PA 66 | 7 |

[1] MC Melamincyanurat
HC Harnstoffcyanurat
M Melamin
MP primäres Melaminphosphat
[2] PA Polyamid
PP Polypropylen
POM Polyoxymethylen
PVC Polyvinylchlorid
[3] ZnSt Zn-Stearat
GlSt Glycerintristearat
CaNaph Ca-Naphthenat

## Patentansprüche

1. Feste, stickstoffhältige Flammhemmer-Agglomerate mit einer mittleren Teilchengröße von 0,1 bis 5 mm zur flammhemmenden Ausrüstung von Thermoplasten, enthaltend Primärteilchen von Flammhemmern mit einer mittleren Teilchengröße von 0,1 bis 10 μm, mit der Maßgabe, daß die Agglomerate bei der Einarbeitung in die schmelzflüssigen Thermoplaste wieder in die Primärteilchen zerfallen.

2. Feste Flammhemmer-Agglomerate gemäß Anspruch 1, dadurch gekennzeichnet, daß ihre mittlere Teilchengroße von 0,1 bis 2 mm und die mittlere Teilchengröße der Primärteilchen von 0,1 bis 5 μm beträgt.

3. Feste Flammhemmer-Agglomerate gemäß Anspruch 1 oder 2, dadurch gekennzeichnet, daß sie Melamin, Melamincyanurat oder Melaminphosphat enthalten.

4. Feste Flammhemmer-Agglomerate gemäß einem der Ansprüche 1 bis 3, dadurch gekennzeichnet, daß die Schmelzpunkte der verwendeten Flammhemmer über den Temperaturen liegen, die bei ihrer Einarbeitung in die schmelzflüssigen Thermoplaste vorliegen.

5. Verfahren zur flammhemmenden Ausrüstung von Thermoplasten, dadurch gekennzeichnet, daß feste, stickstoffhältige Flammhemmer-Agglomerate mit einer mittleren Teilchengröße von 0,1 bis 5 mm, die Primärteilchen von Flammhemmern mit einer mittleren Teilchengröße von 0,1 bis 10 $\mu$m enthalten, in die schmelzflüssigen Thermoplaste eingearbeitet werden, wobei die Agglomerate wieder in die Primärteilchen zerfallen.